# EUROPEAN PATENT APPLICATION

(11) **EP 2 009 631 A1**
(43) Date of publication of application: **31.12.2008**
(21) Application number: 08252235.0
(22) Date of filing: 30.06.2008
(51) Int. Cl.: G11B 15/60

(54) **Tape guider for limiting lateral tape motion**

(30) Priority: 29.06.2007 US 824562
(71) Applicant: QUANTUM CORPORATION, San Jose, CA 95110 (US)
(72) Inventor: Ycas, John A., Bouder, Colorado 80302 (US)
(74) Representative: Charig, Raymond Julian

(57) **Abstract**

A magnetic tape guiding apparatus located in a position associated with a head element for guiding magnetic tape in a tape drive is provided. A body of the tape guiding apparatus has a first end and a second end and sides. There are at least two protrusions of the tape guiding apparatus associated with one side of the body. A magnetic tape medium passes between the at least two protrusions and the head element such that the at least two protrusions and the head element contact the magnetic tape medium. A first flange is associated with the first end of the body, and a second flange is associated with the second end of the body. Each flange projects beyond the at least two protrusions. Both flanges limit movement of the magnetic tape medium.

## Description

### BACKGROUND OF THE INVENTION

Storage subsystems, such as magnetic tape libraries, are widely used for storing information in digital form. Tape storage subsystems typically include one or more tape drives for reading and writing data to removable tape cartridges.

Magnetic tape cartridges have been used to conveniently and efficiently store and handle magnetic recording media for tape drives. One type of tape cartridge consists of a substantially rectangular exterior cartridge housing and a single reel containing a magnetic tape positioned within the housing. The cartridge housing includes an upper housing section and a lower housing section that substantially enclose the magnetic tape. The tape includes a cartridge leader. The cartridge leader becomes exposed through an opening in the cartridge housing during insertion of the cartridge into the tape drive. The tape drive is then able to engage and retrieve the tape from the cartridge for recording and/or playback.

As the tape is retrieved, the thin magnetic tape is typically spooled between a take-up reel and a supply reel. Guide rollers within the tape drive guide the tape medium across the magnetic read/write head for performing read/write operations. However, as thicknesses of tape media and the width of data tracks on tape media continue to decrease, while tape drive speed increases, with new technological improvements, conventional guide rollers may not perform as well. Furthermore, technological improvements allow for narrower tape tracks, which increase the data density of the magnetic tape. This decreases the acceptable amount of track following error.

Therefore, it is important to maintain effective contact and alignment between the read/write head and the tape medium so that the data is read or written accurately. For at least this reason, it is becoming more important to reduce lateral tape motion (LTM) in order to provide effective contact of the tape with the read/write head.

Previously, tape in a tape drive has only been guided by guide rollers coupled to the tape drive to determine the tape path to the magnetic read/write head. There have been attempts to modify the guide rollers to more accurately guide the tape by adjusting position or height of the guide rollers to contact the tape. However, because the guide rollers are situated away from the read/write head, there is still tape motion near the read/write head, which may cause inaccuracies in reading and writing data.

Therefore, a simple and inexpensive way to guide tape to effectively contact a magnetic read/write head is desired.

### BRIEF SUMMARY OF THE INVENTION

In accordance with embodiments of the present invention, a magnetic tape guiding apparatus associated with a head element in a tape drive is provided. A body of the tape guiding apparatus has a first end, a second end, and sides. There are at least two protrusions of the tape guiding apparatus associated with one side of the body. A magnetic tape medium passes between the at least two protrusions and the head element such that the at least two protrusions and the head element contact the magnetic tape medium. A first flange is associated with the first end of the body, and a second flange is associated with the second end of the body. Each flange projects beyond the at least two protrusions. Both flanges limit movement of the magnetic tape medium.

In accordance with other embodiments of the present invention, a method of guiding a magnetic tape medium using a tape guiding apparatus associated with a head element of a tape drive is provided. The magnetic tape medium passes between a take-up reel and a supply reel along the tape path such that the magnetic tape medium contacts a head element. The tape guiding apparatus guides the magnetic tape medium to contact the head element. The tape guiding apparatus includes a body, which has a first end, a second end, and sides. There are at least two protrusions of the tape guiding apparatus associated with one side of the body. A magnetic tape medium passes between the at least two protrusions and the head element such that the at least two protrusions and the head element contact the magnetic tape medium. A first flange is associated with the first end of the body, and a second flange is associated with the second end of the body. Each flange projects beyond the at least two protrusions. Both flanges limit movement of the magnetic tape medium.

Other features and aspects of the invention will become apparent from the following detailed description, taken in conjunction with the accompanying drawings which illustrate, by way of example, the features in accordance with embodiments of the invention. The summary is not intended to limit the scope of the invention, which is defined solely by the claims.

### BRIEF DESCRIPTION OF THE DRAWINGS

Figure 1 illustrates an embodiment of a tape drive including a tape guiding apparatus;

Figure 2 illustrates an embodiment of a tape guiding apparatus;

Figure 3 illustrates an embodiment of a tape guiding apparatus, associated head element, and magnetic tape medium;

Figure 4 illustrates an embodiment of a perspective view of the tape guiding apparatus;

Figure 5A illustrates lateral tape motion measurement not including an embodiment of the tape guiding apparatus.

Figure 5B illustrates lateral tape motion measurement including an embodiment of the tape guiding apparatus.

In the following description, reference is made to the accompanying drawings which form a part thereof, and which illustrate several embodiments of the present invention. It is understood that other embodiments may be utilized and structural and operational changes may be made without departing from the scope of the present invention. The use of the same reference symbols in different drawings indicates similar or identical items.

### DETAILED DESCRIPTION OF THE INVENTION

The following description is presented to enable any person of ordinary skill in the art to make and use the invention. Descriptions of specific materials, techniques, and applications are provided only as examples. Various modifications to the examples described herein will be readily apparent to those of ordinary skill in the art, and the general principles defined herein may be applied to other examples and applications without departing from the spirit and scope of the invention. Thus, the present invention is not intended to be limited to the examples described and shown, but is to be accorded the scope consistent with the appended claims.

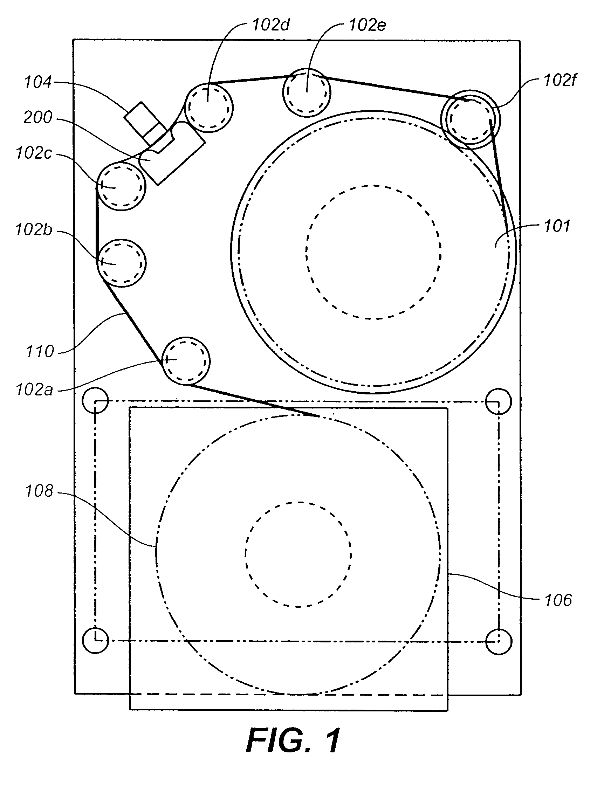

Figure 1 shows a simplified view of an exemplary tape drive 100 having a removable tape cartridge 106 loaded therein. The tape cartridge 106 typically comprises a cartridge housing enclosing a tape medium 110 wound about a rotatable supply reel 108. The tape drive 100 typically includes a take-up reel 101, a plurality of rollers 102a, 102b, 102c, 102d, 102e, and 102f, and a read/write head 104. The take-up reel 101 includes a take-up leader that is coupled to a supply leader extending from one end of the tape medium 110, when the tape cartridge 106 is loaded into the tape drive 100. The tape medium 110 typically comprises a thin film of magnetic material which stores the data. To read or write data, the tape medium 110 is spooled between the take-up reel 101 and the supply reel 108, with rollers 102 guiding the tape medium 110 across the read/write head 104. Upon insertion of the tape cartridge 106 into the tape drive 100, the tape medium 110 on the cartridge reel 108 is coupled to the take-up reel 101 of the tape drive 100. Subsequently, prior to removing the tape cartridge 106 from the tape drive 100, the tape medium 110 is rewound onto the cartridge reel 108 and the supply leader is then uncoupled from the take-up leader. The tape path of the tape medium 110 is created by the plurality of rollers 102a, 102b, 102c, 102d, 102e, 102f between the take-up reel 101 and a read/write head 104. The tape drive may include, but is not limited to, two to six rollers.

When performing read/write operations on the tape medium 110, it is important to maintain acceptable levels of lateral tape motion (LTM) of the tape medium 110, in order to maintain effective contact and alignment between the read/write head 104 and the tape medium 110. The tape may be guided to effectively contact the read/write head 104 by including a tape guiding apparatus 200 in the guided tape path, near the read/write head 104. The tape guiding apparatus 200 is positioned in the tape drive so that an effective tape wrap angle is provided to sufficiently contact the magnetic tape to the read/write 104. In some embodiments, the position of the tape guiding apparatus 200 may be adjustable.

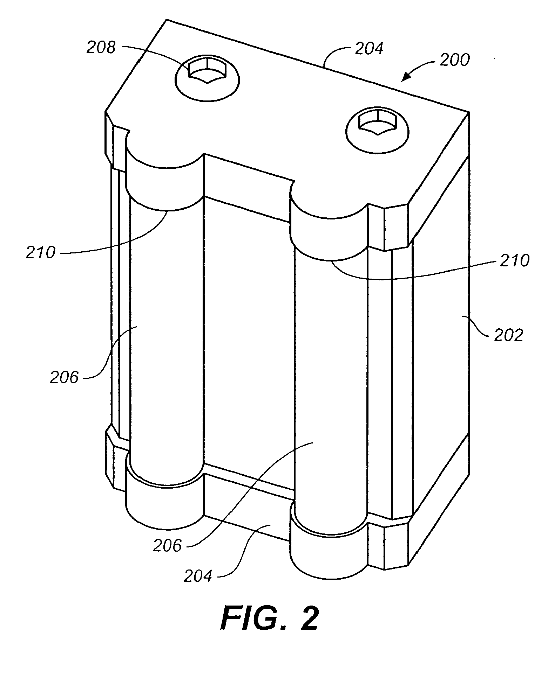

Figure 2 shows a tape guiding apparatus 200 in accordance with embodiments of the invention. A body 202 is shown with a first end and a second end. As shown in this embodiment, each end is covered with a cap 204. Each cap 204 may be connected to the body 202 with connecters 208, such as screws. The caps 204 connect at least two protrusions 206 to one side of the body 202. Two protrusions 206 are shown as rods that provide a rounded surface to contact the magnetic tape media. The tape guiding apparatus 200 is coupled to the tape drive in a position so that the read/write head is situated between the at least two protrusions 206. In this position, the tape passes between the tape guiding apparatus 200 and the read/write head creating an effective tape wrap angle to sufficiently contact the magnetic tape to the read/write head. Each cap 204 comprises a flange 210 that overhangs over the protrusions 206 to limit movement of the tape medium as it passes over the at least two protrusions 206.

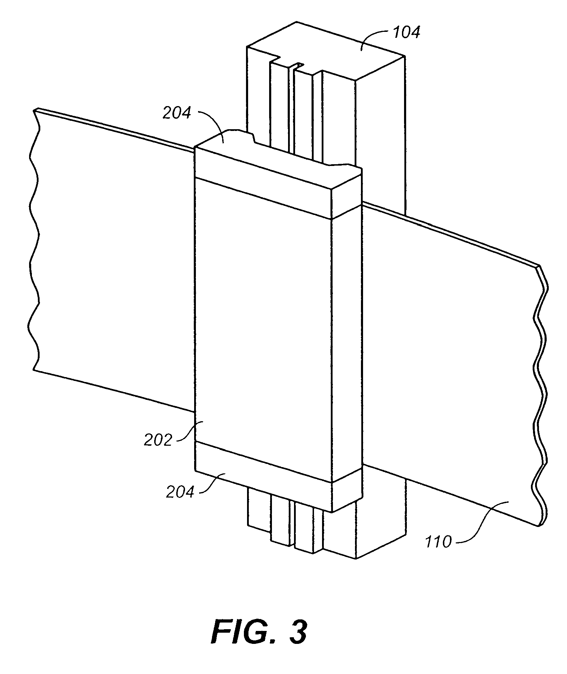

Figure 3 shows a perspective back view of the tape guiding apparatus 200 in a position proximal to a read/write head element 104, according to embodiments of the invention. Caps 204 are illustrated connected to each end of the body 202 of the tape guiding apparatus. The top and bottom caps 204 overhang the body 202 and act as flanges to prevent lateral tape travel. The junction between the rods and the cap provides a square inner corner so that the magnetic tape medium edge is not inclined to buckle easily.

Additionally, in the view shown in Figure 3, the at least two protrusions face the read/write head element 104. The at least two protrusions guide the magnetic tape medium 110 to contact the head element 104. The rounded edges of the protrusions, which contact the magnetic tape provide a smooth transition and lead-in for the magnetic tape as it approaches the read/write head.

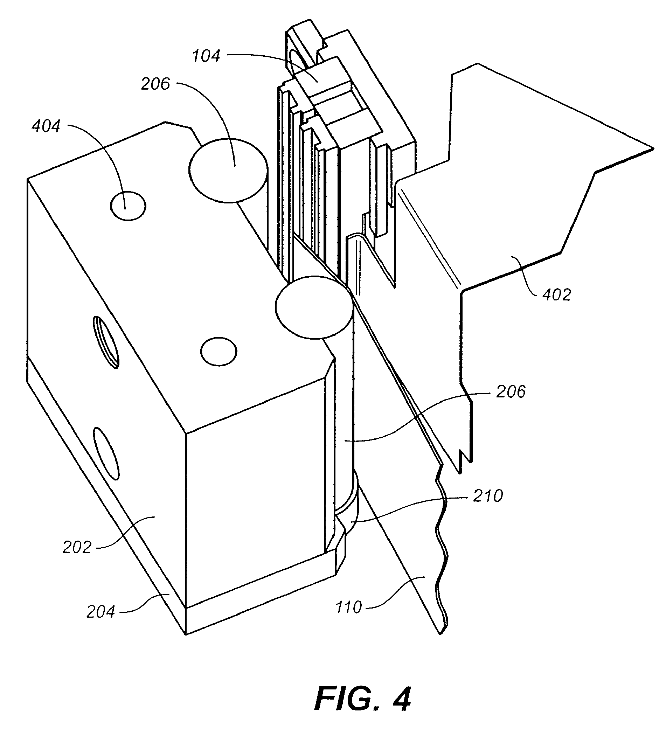

Figure 4 shows another perspective view of the tape guiding apparatus according to embodiments of the invention. In Figure 4, one cap 204 is removed and one end of the body 202 is shown. A cut-away view of the magnetic tape medium 110 is shown passing between the at least two protrusions 206 of the tape guiding apparatus and the head element 104. The at least two protrusions 206 are illustrated associated with one side of the body 202. Hole 404 illustrates connection points for the cap 204 to the body 202. A flex lead 402 for electrical connection to a controller (not shown) is shown attached to head element 104. The flex lead carries data signals to a controller in the tape drive.

In some embodiments of the invention, the position of the tape guiding apparatus may be adjustable. The tape guiding apparatus may be rotated along the long axis to adjust the tape wrap angle for the read/write head, or to move the tape guiding apparatus out of the tape path completely so that the magnetic tape medium no longer contacts the tape guiding apparatus.

Furthermore, a head-positioning actuator may be included in the tape drive to push the head into a position that enables the head to contact the tape medium. Since the tape guider apparatus can limit the lateral travel of the tape, the stroke of the head-positioning actuator to move the head into position may be reduced. In other words, the head-positioning actuator may not have to push the head as far as previous head-positioning actuators in order for the head to be in the correct position for contacting the magnetic tape medium. Therefore, the head actuator system may be simplified by implementing embodiments of the invention.

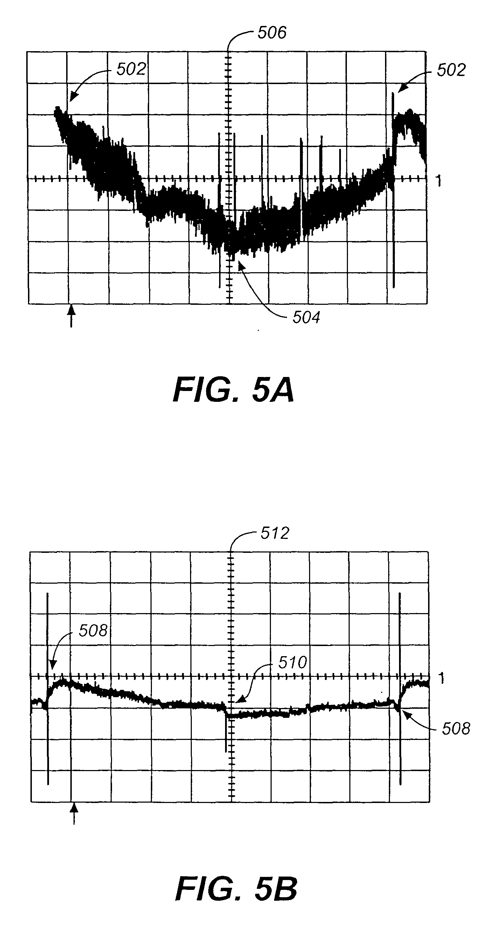

Figure 5A and Figure 5B illustrate measured lateral tape motion (LTM) along the entire length of a magnetic tape medium. Figure 5A shows LTM of a run of a magnetic tape medium, from the beginning of tape (BOT) 502, to the end of tape (EOT) 504, and back to the BOT 502, not including a tape guiding apparatus according to embodiments of the invention. The vertical axis 506 represents the lateral tape motion. Each division of the vertical axis 506 represents 5 microns. In this example, the LTM of the magnetic tape medium run (BOT-EOT-BOT), not including a tape guiding apparatus according to embodiments of the invention, is approximately 25 microns.

On the other hand, Figure 5B shows the LTM of a run of a magnetic tape medium including a tape guiding apparatus according to embodiments of the invention. Similarly to Figure 5A, Figure 5B illustrates an example of a run of magnetic tape medium, from BOT 508, to EOT 510, and back to the BOT 508. Also similar to Figure 5A, the vertical axis 512 represents LTM at a scale of 5 microns/division. In this example, the LTM of the magnetic tape medium run (BOT-EOT-BOT), including a tape guiding apparatus, according to embodiments of the invention, is approximately 6 microns. The LTM is greatly reduced in the tape drive including a tape guiding apparatus.

The above detailed description of the preferred embodiments of the invention has been presented for the purposes of illustration and description. It is not intended to be exhaustive or to limit the invention to the precise form disclosed. Many modifications and variations are possible in light of the above teaching.

Although the present invention has been described in connection with some embodiments, it is not intended to be limited to the specific form set forth herein. Rather, the scope of the present invention is limited only by the claims. Additionally, although a feature may appear to be described in connection with particular embodiments, one skilled in the art would recognize that various features of the described embodiments may be combined in accordance with the invention. Moreover, aspects of the invention describe in connection with an embodiment may stand alone as an invention.

Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

## Claims

1. A magnetic tape guiding apparatus, wherein the tape guiding apparatus is located at a position associated with a head element in a tape drive, the tape guiding apparatus comprising:
a body with a first end, a second end, and sides;
at least two protrusions associated with one side of the body, wherein the at least two protrusions are operable for passing a magnetic tape medium between the at least two protrusions and the head element so that the at least two protrusions and the head element contact the magnetic tape medium; and
a first flange and a second flange, the first flange associated with the first end of the body, and the second flange associated with the second end of the body, wherein each flange projects beyond the at least two protrusions for limiting movement of the magnetic tape medium.

2. The magnetic tape guiding apparatus of claim 1, wherein the at least two protrusions have a rounded surface for contacting the magnetic tape medium.

3. The magnetic tape guiding apparatus of claim 2, wherein each of the at least two protrusions is a rod.

4. The magnetic tape guiding apparatus of claim 3 further comprising a first cap and a second cap, wherein the first cap is connected to the first end of the body, and the second cap is connected to the second end of the body, and each cap is operable to associate each rod to the body.

5. The magnetic tape guiding apparatus of claim 4, wherein the first cap comprises the first flange and the second cap comprises the second flange.

6. The magnetic tape guiding apparatus of claim 1, wherein the position of the magnetic tape guiding apparatus is adjustable to adjust a wrap angle of the magnetic tape medium around the head element.

7. The magnetic tape guiding apparatus of claim 6, wherein the position of the magnetic tape guiding apparatus is adjustable by rotation along the long axis.

8. The magnetic tape guiding apparatus of claim 6, wherein the position of the magnetic tape guiding apparatus is adjusted so that the magnetic tape is not contacting the magnetic tape guiding apparatus.

9. The magnetic tape guiding apparatus of claim 1, wherein the head element is situated between the at least two protrusions, and the at least two protrusions contact the magnetic tape medium such that there is a wrap angle of the magnetic tape medium around the head element.

10. A method of guiding a magnetic tape using a tape guiding apparatus, wherein the tape guiding apparatus is located at a position associated with a head element in a tape drive, the method comprising:
passing the magnetic tape medium between a take-up reel and a supply reel along the tape path such that the magnetic tape medium contacts a head element; and
guiding the magnetic tape medium to contact the head element, wherein guiding comprises:
contacting at least two protrusions of a tape guiding apparatus associated with a body, wherein the body has a first end, second end, and sides, the at least two protrusions are associated with the same side of the body, and the magnetic tape medium passes between the at least two protrusions and the head element so that the at least two protrusions and the head element contact the magnetic tape medium; and
using a first flange and a second flange for limiting movement of the magnetic tape medium, the first flange associated with the first end of the body, and the second flange associated with the second end of the body, wherein each flange projects beyond the at least two protrusions for limiting movement of the magnetic tape medium.

11. The method of claim 10, wherein the head element is situated between the at least two protrusions, and the at least two protrusions contact the magnetic tape medium such that there is a wrap angle of the magnetic tape medium around the head element.

12. A tape drive system for guiding a magnetic tape medium, the tape drive comprising:
a head element for accessing data on the magnetic tape medium; and a tape guiding apparatus located at a position associated with the head element, wherein the tape guiding apparatus comprises:
a body with a first end, a second end, and sides;
at least two protrusions associated with one side of the body, wherein the at least two protrusions are operable for passing a magnetic tape medium between the at least two protrusions and the head element so that the at least two protrusions and the head element contact the magnetic tape medium; and
a first flange and a second flange, the first flange associated with the first end of the body, and the second flange associated with the second end of the body, wherein each flange projects beyond the at least two protrusions for limiting movement of the magnetic tape medium.

13. The tape drive system of claim 12, further comprising:
a take-up reel; and
a tape path for the magnetic tape medium.

14. The tape drive system of claim 12, further comprising a controller.

15. The tape drive system of claim 12, further comprising a head positioning actuator.
